# DEMANDE DE BREVET EUROPEEN

(11) **EP 1 521 055 A2**
(43) Date de publication de la demande: **06.04.2005**
(21) Numéro de dépôt: 04023444.5
(22) Date de dépôt: 01.10.2004
(51) Int. Cl.: G01B 11/24

(54) **Procédé et installation pour le contròle de qualité en boulangerie**

(30) Priorité: 03.10.2003 FR 0311649
(71) Demandeur: Société à Responsabilité Limitée De La Ballina Frères, 12350 Maleville (FR)
(72) Inventeur: de la Ballina, Angel, 1220 Villefranche de Rouergue (FR); de la Ballina, Hélios, 12350 Maleville (FR); Robert, Pierre, 49300 Cholet (FR); Somville, Olivier, 49610 Meulaine sur Aubance (FR)
(74) Mandataire: Thibon-Littaye, Annick

(57) **Abrégé**

Conformément à l'invention, les produits à contrôler sont entraînés en défilement dans le champ de vision d'une caméra matricielle (4) qui saisit des images successives quand ils sont éclairés alternativement en mode d'éclairage direct (31, 32) et en mode de rétro-éclairage (33) à travers une bande convoyeuse translucide (35). A partir des images obtenues sous rétro-éclairage on détermine pour chaque produit un contour à l'intérieur duquel on définit une zone échantillon couvrant une surface de forme prédéterminée calculée pour être entièrement comprise dans l'aire dudit contour. On examine ensuite les contrastes décelables en analyse de surface sur l'image d'éclairage direct, par exemple pour déterminer une densité de taches.

## Description

La présente invention concerne les techniques de contrôle de qualité impliquant la saisie d'images numériques et un traitement des signaux obtenus en analyse d'images telles qu'elles peuvent être appliquées dans le secteur industriel de la boulangerie. Il se comprend de soi que l'on parle ici de l'industrie de la boulangerie au sens où elle n'est pas limitée à la fabrication de produits constituant véritablement des pains dans l'alimentation courante et où elle s'étend, par exemple, à tous les produits dits plus particulièrement de viennoiserie ou de biscuiterie.

Dans le cadre de la présente invention, on considère que le propre de cette industrie (ou des industries similaires) c'est que les produits dont on cherche à vérifier la qualité avant leur emballage à destination des clients sont de petits produits, qui sont déposés en vrac sur un convoyeur à la sortie d'un poste de fabrication. Autrement dit, ces produits ne se présentent pas un à un sur la bande transporteuse du convoyeur, ils ne sont pas tous orientés de la même manière quand bien même ils présenteraient tous la même forme à l'unité, même longs les pains n'arrivent pas nécessairement parallèles à la direction de défilement imposée par le convoyeur. A ces incertitudes il s'ajoute, surtout quand on souhaite disposer d'un matériel pouvant donner lieu lui-même à une commercialisation de niveau industriel grâce à des facilités de paramétrage appropriées, que les produits à contrôler en qualité, ne serait-ce que par une simple vérification de conformité par rapport à des normes dimensionnelles prédéfinies, peuvent être aussi bien des produits cuits complètement terminés pour la consommation alimentaire finale que des produits considérés dans une étape intermédiaire de la chaîne de fabrication. A titre d'exemples, il peut s'agir, dans le second cas, de produits dits précuits, de produits crus surgelés, avant ou après l'étape de poussée de la pâte, de tous produits passant d'une étape de fabrication amont à une étape de fabrication aval, cette dernière représentant le "client" dont les prescriptions sont à prendre en compte pour le contrôle de qualité.

Pour réaliser le contrôle de qualité sur des produits de ce genre, l'invention prévoit de procéder par visiométrie. C'est dire qu'elle fait application de techniques d'acquisition de données d'images numériques et de traitement des signaux véhiculant ces informations qui sont en elles-mêmes classiques. Il en résulte qu'il ne sera pas nécessaire de décrire ici ces techniques pour ce qu'elles ont de connu, dès lors que les particularités de leur application dans un contexte tel que celui de la boulangerie seront correctement dégagées.

L'invention s'exprime de plusieurs manières, principalement dans les termes d'un procédé et dans ceux d'une installation conçue pour la mise en oeuvre de ce procédé. Elle se traduit essentiellement dans le mode de saisie en acquisition des données d'images numériques, dans l'analyse des signaux correspondants et dans les commandes d'organes du matériel qui sont déclenchées automatiquement en fonction du résultat de cette analyse.

L'invention sera maintenant plus précisément définie et décrite dans ses caractéristiques principales, lesquelles doivent être considérées non seulement à titre individuel mais également dans toutes leurs combinaisons techniquement opérantes.

Conformément à l'une de ces particularités de l'invention les produits ou articles sont déposés, sans organisation préalable, mais de préférence simplement étalés par extension d'un convoyeur amont d'alimentation conçu à cet effet, tendant à les séparer les uns des autres dans la direction longitudinale de convoyage et/ou dans la direction transversale qui lui est perpendiculaire, sur un convoyeur de contrôle qui les fait défiler à travers un système de visiométrie où il est procédé à la saisie des images numériques.

Ce système de visiométrie est équipé de tous moyens nécessaires pour une saisie d'images qui est double pour chaque produit, pour être sensible à des degrés de contraste entre niveaux de gris de deux ordres de grandeur différents. L'analyse des signaux traduisant les images ainsi recueillies s'effectue similairement en deux étapes, qui se succèdent dans le temps à un rythme synchronisé avec les conditions d'éclairage.

Les résultats de l'analyse servent à commander le transfert de chaque produit vers une sortie ou une autre, après un délai qui est calculé en synchronisme avec la vitesse de défilement des produits qu'assure le convoyeur. On admet que le système de prise de vues est lui-même fixe, mais bien entendu, ce qui importe c'est le déplacement relatif des produits par rapport au système de prise de vues, et ce déplacement relatif pendant la saisie des images pourrait être pris en charge en tout ou partie par le système de prise de vues. ,

L'invention fait avantageusement application de schémas opératoires et de moyens qui sont en eux-mêmes connus, notamment ceux qui ont été décrits dans le brevet européen EP 0 763 470 en ce qui concerne le repérage des produits ou articles individuels quand ils passent ensemble dans le champ de vision d'une caméra matricielle assurant la saisie d'images répétitives et en ce qui concerne le comptage des articles avec calcul d'un appoint à effectuer afin de les regrouper en un nombre prédéterminé pour emballage. Le même brevet décrit un système de tri qui peut avantageusement être utilisé dans le cadre de la mise en oeuvre de l'invention, s'agissant d'un dispositif qualifié de "peigne", qui a pour fonction de retenir ceux des articles qui viendraient en surnombre et de laisser passer ceux qui sont nécessaires en appoint.

En particularités secondaires, l'invention prévoit de saisir les images successives de manière répétitive par une caméra matricielle unique, réglée par elle-même ou par les paramètres des conditions de traitement de signaux associés, pour un fonctionnement adapté en alternance à l'un et à l'autre des deux degrés de contraste d'ordres de grandeur différents.

A chaque période de la succession répétitive, sur un produit déterminé, la saisie d'image s'effectue dans un premier temps alors que les produits sont éclairés sous un mode de rétro-éclairage, c'est-à-dire sous un éclairage par rétroprojection, avantageusement au travers de la bande transporteuse du convoyeur, réalisée translucide à cet effet. Les signaux exprimant l'image de rétroprojection ainsi acquise sont soumis à un traitement de type informatique basé sur le contraste dû à la différence de luminosité entre le fond éclairé de l'image et le contour du produit à l'intérieur duquel les pixels d'image traduisent une plus forte opacité. Le degré de contraste entre les deux niveaux de gris est important. L'analyse des signaux retient comme pixel de contour chaque pixel où ce contraste est au moins égal à une valeur seuil prédéterminée. On obtient ainsi une image de contour de chaque produit.

Sur cette image de contour de la première étape, le système procède à des mesures permettant de vérifier si le produit respecte des exigences dimensionnelles prédéterminées en s'assurant que les dimensions en question sont correctement situées à l'intérieur de fourchettes de valeurs prédéterminées. Dans le cas favorable, le produit est affecté d'un attribut de qualité conforme, dans le cas contraire, d'un attribut de non-conformité.

En exigences dimensionnelles de qualité, on rencontre couramment d'une part la longueur, distance entre ceux des points du contour du produit qui sont le plus éloignés l'un de l'autre (quelle que soit l'orientation du produit), d'autre part la largeur, qui l'on définit en général, au plus simple pour les applications de boulangerie, comme étant la distance entre les points extrêmes du contour sur une ligne droite perpendiculaire à la longueur croisant celle-ci en son milieu. On y ajoute souvent la flèche, traduisant la courbure de la ligne médiane d'un produit en longueur, notamment par la distance du milieu de la largeur de la mesure précédente à la ligne droite joignant les points extrêmes de la longueur. Cette flèche sera par exemple celle d'un pain de pâte crue sortant d'un congélateur à spirales, auquel cas les exigences de qualité demanderont que cette flèche ne dépasse pas un seuil prédéterminé.

Dans un second temps, on procède à une saisie d'images s'effectuant en mode d'éclairage direct, donc par le dessus du produit en cours de transport sur la bande de convoyage. Une image numérique monochrome est en général satisfaisante pour les besoins des applications préférées de l'invention, bien que l'on puisse aussi procéder par colorimétrie sans sortir pour autant du cadre de l'invention. Mais on a pu observer, dans les conditions pratiques d'application, qu'il était en général à la fois suffisant et plus économique de procéder simplement par analyse des degrés de contraste entre divers niveaux de gris.

Par contre, les niveaux de gris à distinguer sont nombreux et la précision recherchée est différente de celle à choisir dans la première étape. Il s'agit en l'occurrence d'examiner l'état de surface de chaque produit considéré d'après les variations de niveaux de gris qui se manifestent à l'intérieur du contour du produit déterminé lors de la première étape. On vérifie alors si des exigences d'état de surface prédéterminées sont respectées pour que le produit soit déclaré conforme.

Dans les modes de mise en oeuvre préférés de l'invention, on détermine à partir des données d'image si des taches se traduisant par des degrés de contraste de valeur prédéterminée (ou supérieurs à une valeur seuil prédéterminée), le cas échéant se situant entre des niveaux de gris dans une fourchette prédéterminée, sont ou non présentes, et dans l'affirmative on calcule leur densité, pour la comparer par exemple à une densité nominale de présence de graines (de sésame ou autre) imposée par les exigences de qualité.

Pour pouvoir calculer une telle densité ou autre information similaire, l'invention prévoit avantageusement un traitement des signaux obtenus à partir de la première image saisie conduisant à définir le contour d'une forme géométrique prédéterminée dont les dimensions sont automatiquement adaptées pour qu'elle s'inscrive intégralement à l'intérieur du contour de l'image de produit relevée à la première étape.

Dans des cas d'application pratique préférés, compte tenu notamment de la fréquence et de la nature des formes rencontrées dans une chaîne de fabrication de produits de boulangerie, la forme en question est celle d'une ellipse. Le grand diamètre de l'ellipse est avantageusement calculé à partir de la longueur du produit, qui aura en général été déterminée lors de la première étape, ne serait-ce que pour vérifier si cette longueur se trouve correctement à l'intérieur d'une fourchette prédéterminée (ou suffisamment proche d'une valeur nominale prédéterminée). De manière similaire, le petit diamètre de l'ellipse peut être calculé à partir de la valeur dimensionnelle qui aura pu être attribuée au produit en tant que largeur dans la première étape.

De manière générale les deux valeurs seront réduites dans une proportion du même ordre de grandeur entre l'une et l'autre, pour tenir compte d'incertitudes toujours possibles dans la définition du contour du produit. Le cas échéant, le système pourra aussi tenir compte de la valeur calculée en tant que flèche du produit dans le cas où celui-ci fait preuve d'une certaine courbure. En effet il s'agit dans tous les cas que le contour d'ellipse retenu ne déborde pas des limites du contour du produit.

Dans les formes de mise en oeuvre préférées de l'invention, l'analyse des signaux traduisant les images de contraste obtenues en deuxième étape conduit à la détermination de la densité de présence de différences de contraste de valeurs déterminées. Dans le cas le plus simple, cette densité est déterminée sur une zone échantillon unique, qui peut être choisie par exemple au milieu de l'ellipse dont il a été question précédemment, ou s'étendre à toute sa surface. Dans d'autres cas d'application, il pourra être préférable de définir plusieurs zones échantillons, toutes situées à l'intérieur du même contour s'inscrivant en toute sécurité à l'intérieur du contour du produit, par exemple autour de chacun des deux centres d'un contour elliptique.

C'est ainsi, à titre d'exemple, que l'on vérifiera si sur des pains il a été déposé une quantité de graines de sésame qui soit conforme aux prescriptions de fabrication. C'est ainsi également que l'on pourra vérifier si la disposition des pixels où se révèle une différence de contraste de type prédéterminé correspond ou non à celle d'une grigne, de traits ou de tout type de marques que doivent présenter les produits. Par un traitement informatique approprié des données numériques d'image, en ayant recours à des techniques en elles-mêmes connues dans d'autres domaines industriels, on peut déterminer dans quelle mesure deux pixels voisins révélant une différence de contraste donnée relèvent d'un même trait formé sur le produit, puis définir par exemple l'orientation, la longueur, la largeur d'un tel trait, et éventuellement déterminer ensuite si, par exemple, les traits retenus comme étant significatifs sont dans une orientation adéquate par rapport à l'orientation générale du produit particulier, s'ils sont en nombre suffisant, s'ils sont placés à des distances d'écartement mutuel correctes.

L'analyse des contrastes permet de faire ressortir optiquement les marques recherchées tant dans le cas où elles sont dues à une différence de coloration propre du produit lui-même, par exemple en fonction du degré de cuisson, que quand elles sont dues à la géométrie de surface en variation de hauteur. On comprend donc que le système de l'invention peut être paramétré pour déceler par là la présence de taches de cuisson inadmissibles ou celle de reliefs plus ou moins profonds qui décideront de la conformité ou non du produit. D'une manière générale, un appareillage unique peut servir à quasiment toutes les situations que l'on rencontre en boulangerie à partir du moment où il est capable, par exemple, d'une sensibilité distinguant 255 niveaux de gris.

Dans la mise en oeuvre pratique de l'invention, il est prévu de commander de façon automatique l'orientation des produits vers des bacs distincts attribués aux produits de qualité conformes et à des produits non conformes en fonction du résultat de l'analyse des images. Le tri effectué peut prendre en considération d'autres critères et procéder à des orientations multiples. En particulier, pour les produits de boulangerie, dans le cadre des conditions d'application préférées de l'invention, il est particulièrement avantageux de procéder à une détection de la présence éventuelle d'éléments métalliques dans les produits. Une telle détection s'effectue alors avantageusement en amont du système de visiométrie.

De manière classique, cette détection peut s'effectuer par des moyens magnétiques. De façon avantageuse, un résultat positif de cette détection déclenche automatiquement, dans la machine de mise en oeuvre de l'invention, la commande d'un volet basculant qui enverra les produits défectueux correspondants dans un bac spécial, réservé aux produits sévèrement pollués, alors que, quand le caractère non conforme est déduit seulement après les opérations propres de visiométrie, ils seront dirigés vers un bac de produits défectueux mais non pollués par des éléments métalliques.

Dans d'autres variantes de mise en oeuvre de l'invention, une distinction peut avantageusement être opérée suivant que les produits se présentent correctement individualisés en sortie du poste de contrôle de qualité ou s'ils se présentent regroupés en amas de produits non individualisés. Dans ce dernier cas, on peut être amené à commander un envoi plus général de produits vers le bac de produits défectueux afin de ne pas retarder la cadence de traitement général. La situation rejoint celle où la présence d'un élément polluant fait préférer envoyer vers les produits non :consommables l'ensemble de ceux qui sont voisins de celui qui a causé la détection de pollution.

Comme on l'a déjà indiqué, l'invention se traduit également par des particularités portant sur les moyens matériels conçus pour réaliser les opérations qui viennent d'être exposées, donc en termes d'une installation ou d'une machine particulièrement adaptée à la mise en oeuvre du procédé de l'invention.

Concernant les caractéristiques des moyens matériels de mise en oeuvre de l'invention, on peut souligner qu'il est en général avantageux de commander l'éclairage de rétroprojection et l'éclairage direct par un même circuit d'alimentation électrique déterminant le fonctionnement de l'un et le fonctionnement de l'autre par flashes successifs déterminés.

Par ailleurs, on prévoit avantageusement que la cadence de saisie des images soit déterminée en liaison avec la vitesse de défilement des produits imposée par le convoyeur, mais en accord aussi avec les exigences du traitement informatique des signaux à chaque image relevée, pour que la présence de chaque produit se traduise de manière significative au moins dans trois images successives. On est ainsi assuré que dans l'une au moins de ces trois images, le produit en question sera intégralement compris dans le champ de vision de la caméra saisissant l'image instantanée.

La réalisation des moyens matériels de mise en oeuvre de l'invention ressort plus clairement des figures complétant cette description, figures parmi lesquelles :
- la figure 1 illustre schématiquement l'installation décrite en cours de fonctionnement,
- la figure 2, toujours sous une forme très schématique, montre comment fonctionne le répartiteur de sortie dans le cas où la présence d'un produit défectueux a été décelée,
- la figure 3 illustre de manière similaire l'évacuation d'un amas de produits,
- la figure 4 présente schématiquement la même installation complétée pour assurer une détection de produits pollués par des éléments métalliques,
- la figure 5 représente schématiquement la même installation pour une position différente d'un volet commandé en fonction de la présence ou non d'éléments métalliques dans des produits pollués.

Dans ces différentes figures, la représentation de la machine suivant l'invention se borne aux principes essentiels de constitution et de fonctionnement des différents organes, dans leurs relations mutuelles. Il n'a pas paru nécessaire de compliquer les figures par les détails d'une réalisation mécanique qui sont en eux-mêmes parfaitement classiques. En outre, ces derniers peuvent faire l'objet de nombreuses variantes suivant chaque cas particulier d'application.

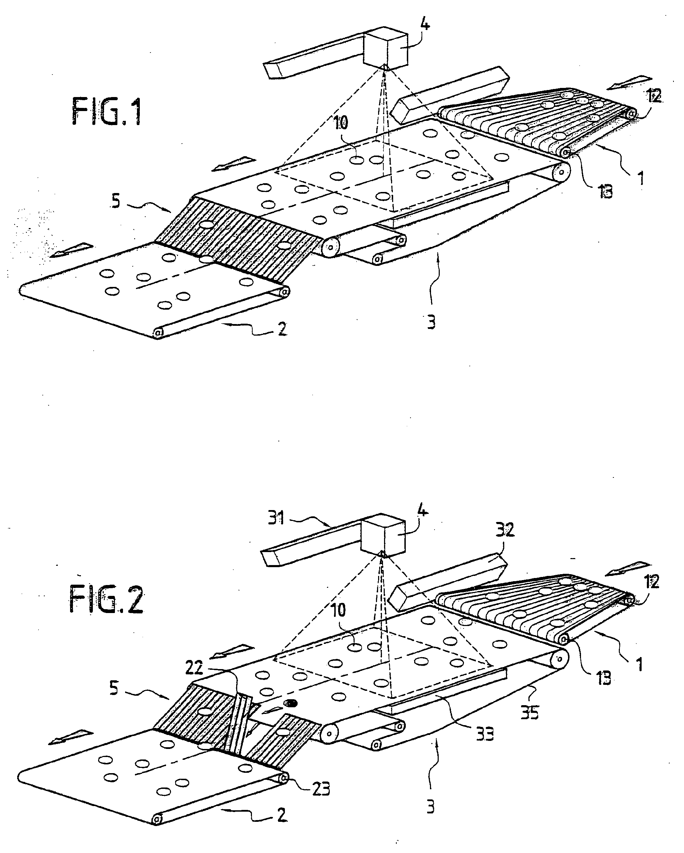

Sur la figure 1, comme d'ailleurs sur les autres figures, on voit essentiellement trois convoyeurs à bande transporteuse se succédant pour faire défiler les produits à travers un système de visiométrie suivant l'invention, entre un poste de fabrication et un poste d'emballage de produits de qualité conforme qui n'ont été représentés ni l'un ni l'autre. On distingue ainsi un convoyeur d'entrée 1, ou convoyeur d'alimentation, et un convoyeur de sortie 2, de part et d'autre d'un convoyeur intermédiaire 3 qui constitue le convoyeur de contrôle proprement dit, faisant défiler les produits 10 sous une caméra de saisie d'images 4.

Le convoyeur d'entrée 1 est illustré sous la forme d'un convoyeur écarteur, c'est-à-dire qu'il se décompose en une série de bandes suivant des trajets synchronisés en boucle fermée de bande sans fin entre deux rouleaux 12 et 13 tout en s'écartant progressivement les unes des autres quand elles passent du rouleau d'entrée 12 au rouleau de sortie 13. De cette manière, des produits qui sont déposés jointifs ou sensiblement tels sur la largeur du convoyeur à l'entrée du convoyeur d'entrée se retrouvent latéralement séparés et individualisés à sa sortie.

Le convoyeur de sortie 2, qui se trouve non plus en amont mais en aval du convoyeur intermédiaire 3, est situé à un niveau légèrement inférieur à celui-ci, et il en est séparé par un dispositif qui joue le rôle d'un répartiteur 5.

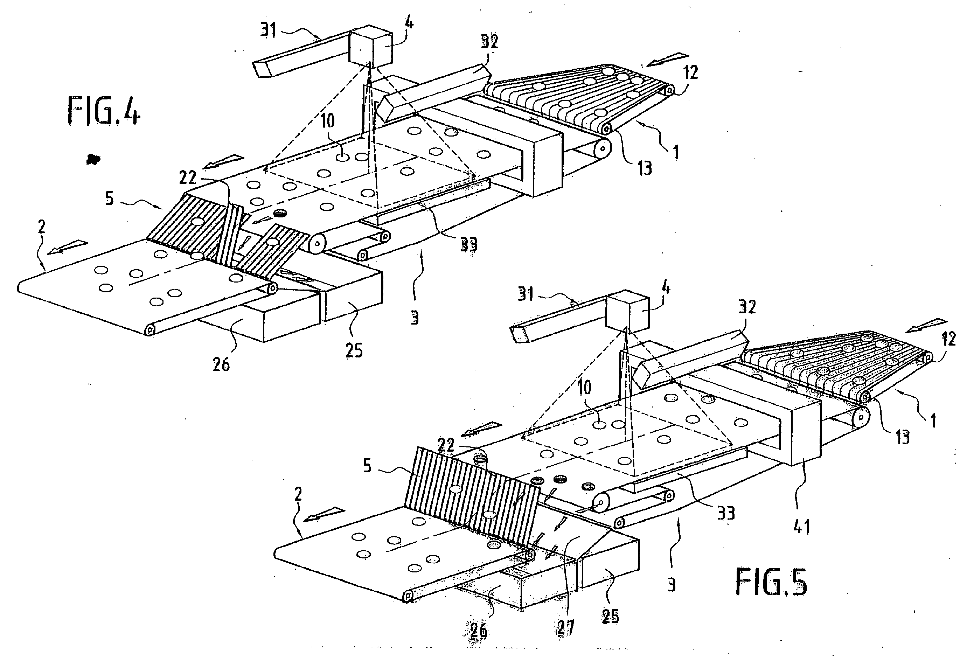

Ce répartiteur 5 est constitué par une multitude de plaques qui, dans une position normale, sont toutes parallèles côte à côte dans le même plan, dans une position inclinée qui guide les produits directement du convoyeur intermédiaire 3 au convoyeur de sortie 2. Les différentes plaques peuvent être commandées individuellement pour basculer, comme il est illustré pour certaines d'entre elles portant la référence 22 sur la figure 2, autour d'un axe d'articulation situé au niveau du rouleau amont 23 du convoyeur de sortie. Elles s'orientent alors vers le haut, libérant ainsi un espace vide de plaques par lequel les produits parvenant là tombent dans un bac de produits défectueux, tel que l'un ou l'autre des bacs 25 et 26 visibles sur la figure 4.

Au niveau du convoyeur de contrôle 3, les figures font apparaître, outre la caméra de saisie ou d'acquisition d'images 4 dont le champ de vision 42 est illustré en traits interrompus, un dispositif d'éclairage supérieur, illustré par deux tubes au néon symétriques 31 et 32, et un dispositif d'éclairage inférieur 33. Ce dernier est avantageusement du même type que le dispositif d'éclairage supérieur, et il suffit qu'il soit alimenté à partir de la même source d'alimentation électrique mais sous une phase différente pour obtenir des flashes d'éclairage synchronisés en alternance. Par une commande de la caméra 4 en synchronisme, on assure un fonctionnement du système de visiométrie alternativement en mode de rétro-éclairage et en mode d'éclairage direct.

D'une manière en elle-même classique, la bande transporteuse 35 du convoyeur intermédiaire 3 est une bande translucide. Quand l'image acquise par la caméra 4 est une image de rétroprojection saisie en mode de rétro-éclairage par le dispositif inférieur 33, l'analyse de contraste correspondante est réglée pour être sensible aux degrés de contraste existant entre le fond lumineux vu à travers la bande translucide et les zones opaques internes au contour des différents objets. Quand l'image est prise sous l'éclairage supérieur, en mode d'éclairage direct, le traitement des signaux est réglé pour distinguer différents niveaux de gris avec une définition supérieure, restant dans les limites de ce qui se voit sur chaque produit.

A la caméra 4 sont associés des moyens informatiques de traitement de données d'images numériques, qui sont commandés, suivant que les données d'image traitées sont celles d'une image obtenue en mode de rétro-éclairage pour analyse de contour, ou celles d'une image obtenue en mode d'éclairage direct pour analyse de surface, respectivement dans une première étape pour déterminer si un contour de chaque produit détecté pour des degrés de contraste d'un premier ordre de grandeur respecte des exigences dimensionnelles prédéterminées, et dans une seconde étape pour déterminer si un état de surface examiné à l'intérieur d'une zone échantillon déterminée pour présenter une forme prédéterminée à partir des données dimensionnelles de contour de la première étape, respecte des exigences de surface prédéterminées se traduisant par des degrés de contraste d'un second ordre de grandeur.

Le circuit de la bande transporteuse 35 du convoyeur intermédiaire passe, comme les autres , autour d'un rouleau amont 36 et d'un rouleau aval 37, mais, en plus, autour de deux rouleaux annexes 38 et 39, qui sont mobiles pour être plus ou moins écartés l'un de l'autre dans la direction longitudinale de convoyage. Leur déplacement relatif est placé sous la commande de signaux résultant du circuit de traitement en analyse des images.

Quand, par ces circuits, il est décelé que les dimensions de contour relevées présentent une particularité dimensionnelle qui témoigne d'un amas regroupant plusieurs produits, le système commande un écartement des deux rouleaux annexes mobiles 38 et 39 qui entraîne un retrait vers l'arrière du rouleau aval 37, en raison d'un allongement du circuit de la bande sans fin entre les rouleaux annexes. Bien entendu, le rouleau aval 37 est lui-même monté mobile en translation longitudinale au niveau de son axe de rotation. Son retrait vers l'arrière écarte la sortie du convoyeur du répartiteur 5. C'est alors l'ensemble des produits parvenant au même moment à la sortie du convoyeur qui tombe dans le bac de produits défectueux.

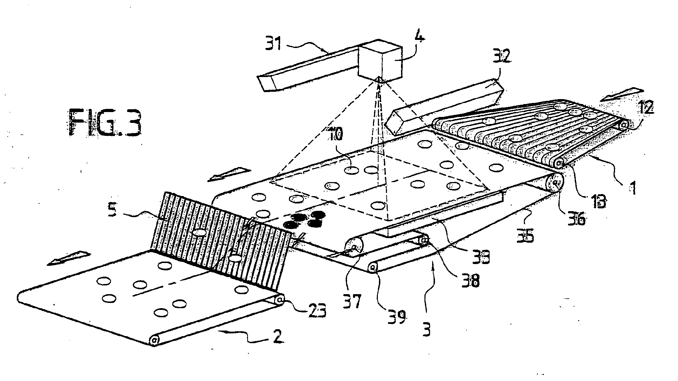

La figure 3, qui illustre cette situation, suppose la présence d'un seul bac de produits défectueux. La situation est la même dans le cas de la figure 2, sauf que, dans cette dernière, le rejet d'un produit défectueux ne s'effectue pas sur toute la largeur de la bande, mais seulement au niveau des plaques 22 qui ont été basculées en position relevée.

Dans le cas des figures 4 et 5, on trouve deux bacs de produits défectueux, et le système répartiteur est complété par un volet 27, qui est monté basculant autour d'un axe d'articulation prévu dans le sens transversal de la ligne de convoyage entre les deux. Ce volet basculant est unique sur la largeur de convoyage. Il est associé à un anneau magnétique 41 qui est sensible à la présence d'éléments métalliques en pollution dans les produits, que ce soit dans la pâte de ces derniers ou que ce soit à côté d'eux en parallèle. De tels éléments métalliques constituent des éléments polluants qui rendent non consommables les produits qui en contiennent.

Le système de détection de pollution métallique est disposé en amont du système de visiométrie. Il a priorité pour commander l'évacuation des produits vers le bac de produits pollués 26. Quand il fournit une réponse positive témoignant de la présence d'une pollution métallique, ceci déclenche automatiquement le basculement du volet 27 au moment voulu pour court-circuiter l'évacuation des produits non conformes qui, sinon, s'effectuerait vers le bac 27, réservé à des produits non conformes, mais sains et acceptables comme produits de seconde qualité, voire de produits destinés à l'alimentation animale.

La figure 5 illustre le fait que, dans le cas de la machine décrite, plutôt que de commander le basculement de l'ensemble des plaques du répartiteur 5 en même temps que celui du volet 27, le système commande un retrait du rouleau aval du convoyeur de manière similaire à ce qui est illustré par la figure 3.

Il va de soi que, pour la commande du basculement de ce volet 27, comme pour celle des plaques basculantes du répartiteur 5, l'ordre de commande envoyé depuis les moyens de détection correspondants détermine le basculement après un délai qui est calculé en fonction de la vitesse de défilement des produits, pour intervenir en synchronisme avec l'arrivée des produits défectueux ou pollués en sortie du convoyeur intermédiaire 3.

La description qui précède explique clairement comment l'invention procède d'une manière que ne pouvait prédire l'homme de l'art et comment elle permet d'atteindre les objectifs qu'elle s'est fixés. Il ressort néanmoins de ce qui précède que l'invention n'est pas limitée aux modes de mise en oeuvre qui ont été spécifiquement décrits dans le courant des exemples ci-dessus et qu'elle s'étend au contraire à toute variante passant par le biais de moyens équivalents.

## Revendications

1. Procédé de contrôle de qualité en boulangerie, suivant lequel les produits à contrôler sont déposés en vrac sur une bande transporteuse d'un convoyeur de contrôle (3) qui les fait défiler à travers un système de visiométrie, sous le champ de vision (42) d'une caméra matricielle de saisie d'images numériques (4) associée à des moyens d'analyse des données d'images ainsi acquises, lesdites images étant saisies de manière répétitive en alternance entre un mode de rétro-éclairage pour une première étape de détection de contour de chaque produit et un mode d'éclairage direct pour une seconde étape d'analyse de surface dudit produit à l'intérieur d'une zone échantillon définie pour être intégralement comprise à l'intérieur dudit contour, et suivant lequel on vérifie, pour attribuer un attribut de qualité conforme à chaque produit, que celui-ci respecte des exigences de dimensions géométriques prédéterminées sur l'image de contour de première étape et des exigences d'état de surface prédéterminées sur l'image de ladite zone échantillon en seconde étape.

2. Procédé suivant la revendication 1 suivant lequel le système de visiométrie est réglé pour être sensible à des degrés de contraste entre niveaux de gris de deux ordres de grandeur différents suivant qu'il fonctionne en détection de contour en première étape ou en analyse de surface en seconde étape, l'image de contour se déduisant de la détection d'un contraste d'un premier ordre, témoignant notamment d'un contraste relativement important entre deux niveaux de gris et l'état de surface se déduisant de la détection d'un contraste d'un second ordre, dans ladite zone échantillon, avec optionnellement analyse de ses variations, notamment entre divers niveaux de gris.

3. Procédé suivant la revendication 1 ou 2 suivant lequel on assure l'éclairage en alternance en mode de rétro-éclairage et en mode d'éclairage direct à partir d'une même source d'alimentation électrique.

4. Procédé suivant la revendication 1, 2, ou 3, suivant lequel lesdites exigences dimensionnelles impliquent que sur l'image de contour du produit considéré, on mesure une longueur, une largeur et une flèche qui soient comprises dans des fourchettes de valeurs prédéterminées.

5. Procédé suivant l'une quelconque des revendications précédentes **caractérisé en ce que** dans la seconde étape on examine les degrés de contraste entre divers niveaux de gris et l'on détermine la densité que présentent des taches témoignant d'un degré de contraste prédéterminé dans ladite zone échantillon.

6. Procédé suivant l'une quelconque des revendications précédentes **caractérisé en ce que** l'on soumet en outre lesdits produits, en amont dudit système de visiométrie, à une procédure de détection de la présence d'éléments polluants rendant les produits non consommables, notamment d'éléments polluants métalliques, la procédure de détection étant alors avantageusement de type magnétique.

7. Procédé suivant la revendication 6 **caractérisé en ce qu'**en cas de présence d'éléments polluants on commande le rejet en produits pollués de tous les produits se présentant simultanément en sortie du système de visiométrie.

8. Procédé suivant l'une quelconque des revendications précédentes **caractérisé en ce que** dans la première étape d'analyse d'image on détermine à partir de ladite image de contour si elle présente une particularité dimensionnelle qui témoigne de la présence d'un amas de produits non individualisés et **en ce que** dans l'affirmative, on commande le rejet en produits défectueux de tous les produits se présentant simultanément en sortie du système de visiométrie..

9. Installation de contrôle de qualité pour produits de boulangerie, dans laquelle lesdits produits sont déposés sur un convoyeur de contrôle qui les fait défiler à travers un système de visiométrie où il sont éclairés alternativement en mode de rétro-éclairage et en mode d'éclairage direct et où il est procédé à la saisie d'images numériques, et qui comporte des moyens d'analyse desdits images numériques, respectivement dans une première étape pour déterminer si un contour de chaque produit détecté pour des degrés de contraste d'un premier ordre de grandeur respecte des exigences dimensionnelles prédéterminées, et dans une seconde étape pour déterminer si un état de surface, examiné à l'intérieur d'une zone échantillon déterminée pour présenter une forme prédéterminée à partir des données de contour de la première étape, respecte des exigences de surface prédéterminées se traduisant par des degrés de contraste d'un second ordre de grandeur, ainsi que des moyens pour commander automatiquement la répartition des produits en sortie dudit convoyeur de contrôle vers au moins un bac de réception des produits conformes et un bac de réception des produits non conformes en fonction des résultats de l'analyse d'image en première étape et en seconde étape.

10. Installation suivant la revendication 9 comportant un convoyeur amont d'alimentation dudit convoyeur de contrôle tendant à séparer les produits les uns des autres dans la direction longitudinale de convoyage et/ou dans la direction transversale qui lui est perpendiculaire, sur ledit convoyeur de contrôle qui les fait défiler à travers le système de visiométrie où il est procédé à la saisie des images numériques.
